# FASCICULE DE BREVET EUROPEEN

(11) **EP 2 521 642 B1**
(45) Date de publication et mention de la délivrance du brevet: **12.10.2016**
(21) Numéro de dépôt: 11703721.8
(22) Date de dépôt: 05.01.2011
(51) Int. Cl.: B29C 49/68, B29C 49/64

(54) **UNITÉ DE TRAITEMENT D'ÉBAUCHES DE CORPS CREUX, ÉQUIPÉE D'UNE CHAMBRE FORMANT UN PIÈGE À LUMIÈRE**
EINHEIT ZUR BEARBEITUNG VON HOHLKÖRPERROHLINGEN MIT EINER KAMMER ZUR FORMUNG EINER LICHTSCHLEUSE
UNIT FOR TREATING HOLLOW BODY BLANKS, PROVIDED WITH A CHAMBER FORMING A LIGHT TRAP

(30) Priorité: 06.01.2010 FR 1000042
(43) Date de publication de la demande: 14.11.2012
(73) Titulaire: Sidel Participations, 76930 Octeville sur Mer (FR)
(72) Inventeur: FEUILLOLEY, Guy, F-76930 Octeville sur mer (FR)
(74) Mandataire: Siloret, Patrick
(86) Numéro de dépôt international: PCT/FR2011/000007
(87) Numéro de publication internationale: WO 2011/083263

(56) Documents cités:
- EP-A1- 0 564 354
- WO-A1-02/32652
- DE-A1-102007 031 771
- JP-A- 4 201 430

## Description

L'invention a trait à la fabrication de corps creux tels que des récipients, par soufflage ou étirage-soufflage à partir d'ébauches en matière plastique.

Le terme « ébauche » désigne une préforme, obtenue par injection d'une matière plastique dans un moule, ou un corps creux intermédiaire obtenu à partir d'une préforme ayant subi au moins une première opération de soufflage et destiné à en subir au moins une seconde.

L'invention concerne plus spécifiquement une opération de traitement des ébauches, notamment une chauffe ou une décontamination.

Un tel traitement est généralement réalisé au défilé au sein d'une unité de traitement, équipée d'une pluralité de sources de rayonnement électromagnétique (infrarouge pour la chauffe, ultraviolet pour la décontamination) devant lesquelles défilent les ébauches entraînées en rotation sur elles-mêmes.

La longueur de l'unité de traitement étant fixe, la puissance du rayonnement et la vitesse de défilement des ébauches sont prédéterminées. Dans le cas de la chauffe, la température de la matière des ébauches à la sortie du four doit être supérieure à sa température de transition vitreuse. Chaque ébauche ainsi chauffée est alors introduite dans un moule au sein de laquelle elle subit l'opération de soufflage ou d'étirage-soufflage qui conférera au corps creux sa forme finale. Dans le cas de la décontamination, la majorité des espèces contaminantes (bactéries, moisissures, etc.) doivent avoir été détruites.

S'agissant plus particulièrement de la chauffe, on en connaît deux grandes technologies.

La première, qui a connu un grand succès industriel et reste à ce jour la plus répandue, utilise, pour la chauffe des ébauches, des batteries de lampes halogènes tubulaires qui rayonnent dans l'ensemble du spectre.

Cette technologie, illustrée par la demande de brevet français n° FR 2 863 932 au nom de la demanderesse, a pour principal inconvénient son faible rendement énergétique (généralement inférieur à 15%), dans la mesure où, d'une part, seule une partie du spectre, dans le domaine de l'infrarouge, est utile à la chauffe et, d'autre part, une fraction seulement du rayonnement frappe effectivement les ébauches, tandis que la diffusion spatiale des lampes est omnidirectionnelle. Des techniques existent pour concentrer au maximum le rayonnement, telle que l'installation de miroirs paraboliques derrière les lampes, mais ces techniques sont insuffisantes pour améliorer le rendement de manière substantielle.

Cette technique présente également l'inconvénient de chauffer de façon non homogène les ébauches dans l'épaisseur, ce qui nuit aux caractéristiques physiques des corps creux ainsi formés. La convection naturelle étant insuffisante pour évacuer correctement le surcroît de calories à la surface des ébauches, il est nécessaire de prévoir une ventilation de l'enceinte au sein de laquelle défilent les ébauches, cf. par exemple la demande de brevet français précitée n° FR 2 863 932. En outre, pour éviter une chauffe non souhaitée du col de l'ébauche, on a coutume de chauffer les ébauches col en bas, ce qui impose de les retourner à la sortie du four pour permettre leur introduction dans les moules.

La deuxième technique, qui n'en est qu'à ses débuts industriels mais a déjà fait l'objet de nombreuses recherches, utilise pour la chauffe des ébauches des lasers émettant dans le domaine de l'infrarouge.

Cette technique, illustrée notamment par les demandes de brevet français n° FR 2 878 185 et FR 2 915 418 au nom de la demanderesse, a pour avantage d'être peu dissipatrice, les sources étant maintenues à une température voisine de la température ambiante (contrairement aux lampes halogènes, dont le tube peut atteindre des températures de l'ordre de 800°C).

Les effets du rayonnement infrarouge sur les ébauches et les caractéristiques des sources font qu'il n'est pas nécessaire d'assurer un refroidissement forcé de l'enceinte pour évacuer les calories excédentaires. Il est ainsi permis d'exploiter au mieux le rayonnement, en confinant l'enceinte au moyen de réflecteurs.

EP 0 564 354 décrit une unité de traitement d'ébauches de corps creux en matière plastique, qui comprend:- une enceinte dans laquelle défilent longitudinalement les ébauches,- une pluralité de sources de rayonnement électromagnétique monochromatique ou pseudo-monochromatique disposées sur au moins un côté latéral de l'enceinte, cette unité de traitement comprenant une chambre destinée à permettre une ventilation de l'enceinte par une circulation d'air, la chambre jouxtant l'enceinte sur un côté supérieur ou inférieur de celle-ci, la chambre s'étendant le long de l'enceinte,la chambre comprenant une paroi supérieure, cette paroi supérieure étant munie d'une ouverture par laquelle la chambre communique avec l'enceinte,chambre comprenant des d'ouïes par lesquelles elle communique avec un environnement extérieur, les ouïes étant positionnées dans un angle mort de la chambre, de manière à empêcher que le rayonnement pénétrant dans la chambre ne sorte directement de celle-ci, l'air frais en provenance de l'environnement extérieur traversant la chambre via les ouïes puis pénétrant dans l'enceinte par l'ouverture.

D'ailleurs, le confinement de l'enceinte est souhaitable pour des raisons de sécurité. En pratique toutefois, ce confinement pose des difficultés techniques, car des ouvertures doivent être prévues pour permettre une circulation d'air, indispensable au maintien d'une température stable dans l'enceinte, à défaut de quoi les ébauches subissent un échauffement non contrôlé qui nuit à la répétabilité du processus de chauffe.

A ce jour, aucune solution satisfaisante n'a été proposée pour assurer un bon confinement de l'enceinte tout en permettant une circulation de l'air dans celle-ci. L'invention vise précisément à remédier à cette problématique.

À cet effet, l'invention propose une unité traitement d'ébauches de corps creux en matière selon la revendication 1.

Il est ainsi possible d'organiser une circulation d'air dans l'enceinte, l'air frais en provenance de l'environnement traversant la chambre via les ouïes, puis pénétrant dans l'enceinte par l'ouverture. En revanche, le rayonnement en provenance de l'enceinte pénétrant dans la chambre par l'ouverture ne peut pas atteindre directement les ouïes, étant forcé de se refléter sur les surfaces de la chambre. Les risques de fuite du rayonnement (notamment infrarouge ou ultraviolet) sont ainsi minimisés, au bénéfice de la sécurité de l'unité de traitement.

Selon un mode de réalisation, la chambre est munie de parois dont une face interne est munie d'un revêtement absorbant le rayonnement.

Les ouïes sont par exemple formées dans des parois latérales de la chambre, de préférence au voisinage d'un bord supérieur de celles-ci. Selon un mode particulier de réalisation, les ouïes sont formées par des échancrures ménagées dans le bord supérieur des parois latérales.

L'ouverture peut être ménagée dans une paroi supérieure de la chambre, par exemple dans un plan médian de l'enceinte. En pratique, cette paroi supérieure peut comprendre une série d'ouvertures situées le long d'un parcours des ébauches.

L'unité de traitement comprend par exemple des capots de fermeture de l'enceinte, du côté de celle-ci opposé à la chambre. Des moyens de réglage de la position transversale des capots peuvent par ailleurs être prévus.

Selon un mode de réalisation, l'unité de traitement comprend un dispositif de réglage de la largeur de l'enceinte. A cet effet, des parois latérales délimitant transversalement l'enceinte peuvent être montées chacune sur une platine mobile transversalement.

D'autres objets et avantages de l'invention apparaîtront à la lumière de la description faite ci-après en référence aux dessins annexés dans lesquels :
- la figure 1 est une vue en perspective de dessus d'une unité de traitement d'ébauches de récipients ;
- la figure 2 est une vue en perspective de dessous de l'unité de traitement de la figure 1 ;
- la figure 3 est une vue d'élévation longitudinale de l'unité de traitement des figures 1 et 2 ;
- la figure 4 est une vue similaire à la figure 3, montrant l'unité de traitement configurée pour accueillir des récipients à col large ;
- la figure 5 est une vue d'élévation en coupe transversale de l'unité de traitement des figures 1 à 3 ;
- la figure 6 représente un détail de l'unité de traitement de la figure 5 ;
- la figure 7 est une vue en coupe longitudinale d'un détail de l'unité de traitement de la figure 5, selon le plan de coupe VII-VII ;
- la figure 8 est une vue en coupe transversale isométrique et en arraché partiel, montrant l'unité de traitement de la figure 5.

On a représenté sur les figures une unité **1** de traitement d'ébauches **2** de corps creux en matière plastique. En l'occurrence les ébauches **2** sont des préformes destinées à former des récipients.

Chaque préforme **2** est montée sur un dispositif de préhension rotatif (appelé tournette) fixé sur une chaîne entraînée en déplacement à vitesse linéaire constante.

La préforme **2** présente, à une extrémité supérieure, un col **3,** qui est destiné à subir un minimum de déformations tant au cours de la chauffe que du moulage subséquent. Dans le col 3 est emmanchée l'extrémité inférieure d'une tournette, en forme de doigt, tandis qu'une extrémité supérieure conformée en pignon engrène une crémaillère disposée le long du parcours de la préforme. De la sorte, chaque préforme **2** est entraînée en rotation autour de son axe de révolution (dit axe principal) à une vitesse de rotation directement proportionnelle à sa vitesse linéaire de déplacement.

La préforme **2** présente un corps **4** sensiblement tubulaire qui se termine, à l'opposé du col **3,** par un fond **5** en forme de calotte hémisphérique.

Sur les figures, les préformes **2** sont représentées col **3** en haut : c'est dans cette position qu'elles sont introduites dans l'unité **1** de traitement et qu'elles y défilent, selon un parcours longitudinal sensiblement rectiligne (bien qu'il puisse présenter tout type de profil) qui s'étend depuis une entrée **6** de l'unité1 de traitement jusqu'à une sortie **7** de celle-ci.

L'unité **1** de traitement comprend une enceinte **8** délimitée par deux parois **9, 10** latérales parallèles en regard, qui s'étendent verticalement le long du parcours, de part et d'autre de celui-ci.

Les parois **9, 10** s'étendent de chaque côté de l'enceinte **8** sur une hauteur sensiblement égale à la longueur du corps **4** des préformes **2.** Dans la configuration illustrée, les préformes **2** sont orientées col **3** en haut, celui-ci dépassant de l'enceinte **8** au-dessus des parois **9, 10.**

Les parois **9, 10** latérales sont montées sur un châssis **11** fixe, avec possibilité de réglage de leur écartement mutuel, comme nous le verrons ci-après.

L'une au moins des parois, dite paroi **9** émettrice, est tapissée d'une pluralité de sources de rayonnement électromagnétique émettant de préférence de manière monochromatique ou pseudo-monochromatique, dirigées vers l'intérieur de l'enceinte **8.** Si le traitement des préformes **2** est un traitement thermique (chauffe), les sources sont choisies pour émettre dans le domaine de l'infrarouge. Si le traitement est une décontamination, les sources sont choisies pour émettre dans le domaine de l'ultraviolet.

En théorie, une source monochromatique est une source idéale émettant une onde sinusoïdale de fréquence unique. En d'autres termes, son spectre en fréquence est constitué d'une seule raie, de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Par abus de langage, on a toutefois coutume de qualifier une telle source réelle de monochromatique. Par ailleurs, on qualifie de « pseudo-monochromatique » une source émettant de manière quasi-monochromatique sur un spectre discret comprenant plusieurs bandes étroites centrées sur des fréquences principales distinctes. On parle également de source multimodes.

L'avantage d'un tel rayonnement est qu'il est concentré sur une (ou plusieurs) fréquence(s) correspondant à une fréquence (ou des fréquences) pour laquelle (ou pour lesquelles) le comportement thermique du matériau des préformes est particulièrement intéressant au regard du cahier des charges. Ainsi, pour obtenir une chauffe rapide en surface, on peut choisir une (ou plusieurs) fréquence(s) pour laquelle (pour lesquelles) le matériau est très absorbant. A contrario, pour obtenir une chauffe plus lente mais plus homogène dans l'épaisseur, on peut choisir une (ou plusieurs) fréquence(s) pour laquelle (pour lesquelles) le matériau est relativement moins absorbant.

Dans ce qui suit, on suppose que le traitement est une chauffe, l'unité **1** de traitement étant une unité de chauffe, qui sera dénommée plus simplement « four ». Dans cette application, chaque préforme **2,** réalisée dans une matière thermoplastique telle que polyéthylène téréphtalate (PET), est destinée, après avoir été ramollie par chauffage au sein de l'unité **1** de chauffe (ci-après plus simplement dénommée « four ») à une température supérieure à sa température de transition vitreuse, à subir dans un moule une opération de soufflage ou d'étirage soufflage pour former un récipient tel qu'une bouteille ou un flacon.

En pratique, les sources sont des diodes laser infrarouge organisées par juxtaposition et superposition pour former une ou plusieurs matrices **12,** par exemple comme cela est décrit dans la demande internationale WO 2006/056673 au nom de la demanderesse. En l'espèce, chaque matrice **12** peut être une matrice de diodes laser à cavité verticale émettant par la surface (VCSEL), chaque diode émettant par exemple un faisceau laser d'une puissance unitaire de 0,9 W à une longueur d'onde de 1130 nm.

Dans l'exemple illustré, le four **1** est équipé de trois matrices **12** de diodes disposées côte à côte le long de l'enceinte **8.** Chaque matrice **12,** représentée de manière simplifiée par un bloc parallélépipédique, est reçue dans un logement **13** ménagé dans un support **14** réalisé sous forme d'une plaque, fixée par l'intermédiaire d'équerres **15** sur une platine **16** montée sur le châssis **11** de manière coulissante.

Les matrices **12** sont séparées deux à deux par des cloisons **17** opaques au rayonnement infrarouge émis par les diodes. Chaque espace entre deux matrices **12** voisines est isolé de l'enceinte **8** par une plaque **18** dont une face, tournée vers l'enceinte **8,** est rendue réfléchissante par polissage ou par métallisation (par exemple par dorure).

Chaque matrice **12** est par ailleurs séparée de l'enceinte **8** par un écran **19** réalisé dans un matériau transparent au rayonnement infrarouge, par exemple en verre de quartz, qui protège la matrice **12** d'éventuels chocs mécaniques dus à des mouvements incontrôlés des préformes **2.**

Les plaques **18** et les écrans **19** sont maintenus en place au moyen d'une lisse **20** basse et d'une lisse **21** haute dans lesquelles les chants des plaques **18** et des écrans **19** sont insérés.

La paroi **10** en regard comprend un réflecteur **22** dont une face **23** interne tournée vers l'enceinte **8** est réfléchissante, de sorte que la portion du rayonnement émis par la paroi **9** émettrice, non absorbée par les préformes **2,** y est réfléchie vers l'enceinte **8 -** et donc vers les préformes **2.** Selon un mode de réalisation préféré, le réflecteur **22** se présente sous la forme d'une tôle d'aluminium dont la face **23** interne est rendue réfléchissante par polissage ou métallisation (par exemple par dorure, celle-ci pouvant être réalisée au moyen d'un traitement de PVD - dépôt physique en phase vapeur).

Le réflecteur **22** est maintenu en place au moyen d'une lisse **24** basse et d'une lisse **25** haute, dans lesquelles les chants du réflecteur **22** sont insérés.

La paroi **10** comprend un support **26** réalisé sous forme d'une plaque, fixée par l'intermédiaire d'équerres **15** sur une platine **16** montée sur le châssis **11** de manière coulissante.

Compte tenu de la longueur du four **1,** des entretoises **27** peuvent avantageusement être interposées entre le support **26** et le réflecteur **22,** afin d'éviter le gauchissement de celui-ci, notamment sous l'effet de la chaleur rayonnée par les préformes **2.**

Comme cela est illustré sur les dessins, le four **1** comprend une chambre **28** qui s'étend le long de l'enceinte 8 qu'elle jouxte sur le côté de celle-ci vers lequel sont tournés les fonds 5 des préformes **2.** En l'occurrence, les préformes **2** étant orientées col **3** en haut, la chambre **28** est disposée sur le côté inférieur de l'enceinte **8,** mais il pourrait s'agir du côté supérieur dans la configuration où les préformes **2** seraient orientées col en bas.

Cette chambre **28** est destinée à permettre une ventilation de l'enceinte **8** par une circulation d'air, selon un mouvement convectif ascendant généré par l'élévation de température de l'air au contact des préformes **2,** tout en formant une barrière au rayonnement électromagnétique émis par les sources. En particulier, le rayonnement laser, cohérent et très directif, se disperse peu à l'échelle du mètre (qui est l'échelle considérée dans le cadre de la présente description) et il est par conséquent préférable de l'empêcher de quitter l'enceinte 8 sans l'avoir au moins atténué en puissance.

La chambre **28** comprend une paroi **29** supérieure et une paroi **30** de fond, horizontales, parallèles et espacées, reliées le long de leurs bords longitudinaux par deux parois **31** latérales verticales. Les parois **29, 30, 31** délimitent verticalement et latéralement un volume **32** interne. La chambre **28** comprend en outre, à ses deux extrémités longitudinales, deux plaques **33** transversales de fermeture qui délimitent longitudinalement le volume **32** interne.

La chambre **28** est fixée de manière rigide au châssis **11** par tout moyen approprié (vissage, soudage, etc.). La paroi **29** supérieure est appliquée contre les lisses **20, 24** basses avec un jeu minimum, de manière à empêcher toute fuite du rayonnement à l'interface.

Les parois **29, 30, 31** de la chambre **28,** de même que ses plaques **33** de fermeture, sont réalisées dans un matériau opaque au rayonnement électromagnétique émis par les diodes, par exemple dans un matériau métallique.

En outre, les faces internes des parois **29, 30, 31** et des plaques **33** sont de préférences revêtues d'une couche d'un matériau absorbant le rayonnement, tel qu'une peinture noire.

La paroi **29** supérieure peut être monobloc, sa face supérieure tournée vers l'enceinte **8** étant alors rendue réfléchissante par polissage ou par métallisation (par exemple par dorure).

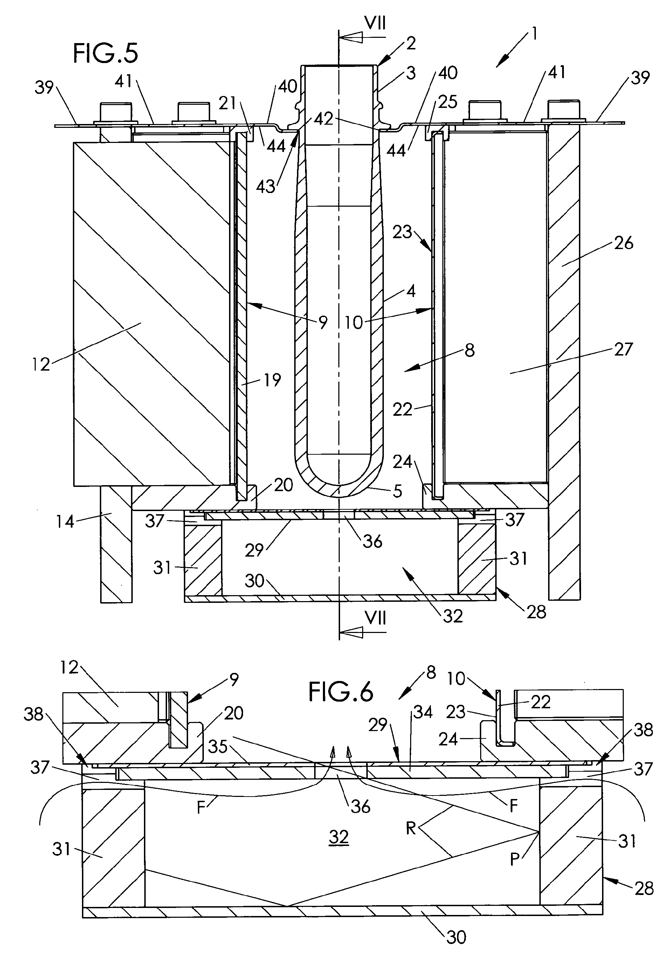

Toutefois, selon un mode de réalisation préféré illustré sur les figures 5 et 6, la paroi **29** supérieure comprend deux plaques superposées, à savoir une plaque **34** inférieure, épaisse, qui confère à la paroi **29** une bonne rigidité structurelle ainsi qu'une bonne tenue à la chaleur, et une plaque **35** supérieure, mince, posée sur la plaque **34** inférieure et dont une face supérieure, tournée vers l'enceinte **8,** est rendue réfléchissante par polissage ou par métallisation (par exemple par dorure). Cette structure bi-couche se révèle à long terme plus économique que la structure monobloc évoquée ci-dessus, car elle permet, le cas échéant, par exemple en cas de rayures ou de marques consécutives à d'éventuels chocs ou chutes des préformes **2** altérant le caractère réfléchissant de la paroi **29,** de ne remplacer que sa plaque **35** supérieure.

La paroi **29** supérieure est par ailleurs munie d'au moins une ouverture **36** qui permet la mise en communication du volume **32** interne de la chambre **28** avec l'enceinte **8.** Plus précisément, dans le mode de réalisation illustré sur les figures, la paroi **29** supérieure est percée d'une série d'ouvertures **36** circulaires qui s'étendent longitudinalement sensiblement sur toute la longueur de la paroi **29,** en étant centrées sur un plan médian de l'enceinte **8.**

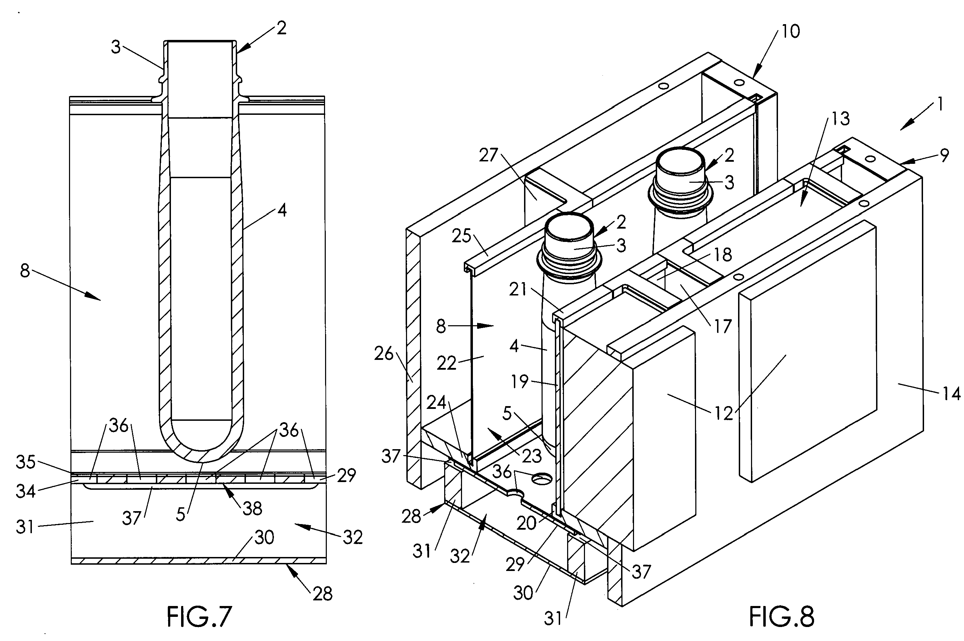

Comme cela est bien visible sur les figures 5 et 6, ainsi que sur la figure 7, la chambre **28** est en outre percée d'ouïes **37** pour permettre la mise en communication du volume **32** intérieur de la chambre **28** avec un environnement aérien extérieur (par exemple l'air libre ou, dans l'hypothèse où le four **1** est enfermé dans une armoire, l'air confiné, conditionné ou pressurisé emplissant celle-ci).

Les ouïes **37** sont positionnées dans un angle mort de la chambre **28,** de manière à empêcher que le rayonnement pénétrant dans la chambre **28** ne sorte directement de celle-ci. Plus précisément, la chambre **28** est agencée pour absorber, par des réflexions multiples contre les faces internes de la chambre **28,** suffisamment d'énergie du rayonnement pour que le rayonnement résiduel qui parviendrait à sortir de la chambre **28** par les ouïes **37** ne soit pas dangereux pour les personnels circulant au voisinage du four **1.**

Selon un mode préféré de réalisation, illustré sur les figures, les ouïes **37** sont ménagées au voisinage d'un bord **38** supérieur des parois **31** latérales. Plus précisément, les ouïes **37** sont en l'occurrence formées par des échancrures ménagées directement dans le bord **38** supérieur, de sorte à jouxter la paroi **29** supérieure.

La hauteur des ouïes **37** (mesurée verticalement) est à la fois suffisamment importante pour permettre une libre circulation de l'air de l'extérieur vers le volume **32** interne de la chambre **28,** et suffisamment faible pour éviter que le rayonnement pénétrant le volume **32** interne par les ouvertures **36** n'atteigne directement les ouïes **37.**

La hauteur des ouïes **37** dépend en pratique de la largeur de la chambre **28,** du diamètre des ouvertures **36,** et de l'épaisseur de la paroi **29** supérieure. Ces dimensions conditionnent en effet, comme cela est illustré sur la figure 6, l'angle d'incidence maximale d'un rayon **R** pénétrant transversalement dans le volume **32** interne de la chambre **28** depuis l'enceinte **8,** et le point **P** d'impact où ce rayon **R** est susceptible de frapper une paroi **31** latérale. On voit que pour empêcher ce rayon **R,** qui joint diagonalement les bords supérieur et inférieur opposés de l'ouverture **36,** d'atteindre directement une ouïe **37,** le bord inférieur de celle-ci doit être situé au-dessus de la ligne longitudinale formée par les points **P** d'impact des rayons **R** transversaux d'incidence maximale pénétrant dans la chambre **28** selon la configuration décrite ci-dessus.

Comme cela est représenté sur la figure 6, un tel rayon **R** d'incidence maximale peut subir une première réflexion partielle en direction de la paroi **30** de fond, une partie au moins de son énergie étant cependant absorbée par le revêtement absorbant de la paroi **31** latérale. Une partie au moins de l'énergie résiduelle du rayon est alors absorbée par la paroi **30** de fond, et la portion réfléchie du rayon n'est plus suffisamment énergétique pour représenter un danger, même dans l'hypothèse où après ces deux réflexions le rayon atteindrait une ouïe **37.** En d'autres termes, l'énergie du rayonnement va en décroissant en étant dissipée dans la chambre **28,** qui forme ainsi un piège à lumière.

Il est à la portée de l'homme du métier d'appliquer les principes de l'optique géométrique en effectuant un tracé similaire à celui de la figure 6, pour, en fonction des dimensions de l'enceinte **8,** adapter les dimensions de la chambre **28** (notamment : distance entre les parois **31** latérales, épaisseur de la paroi **29** supérieure, diamètre des ouvertures **36,** hauteur et positionnement des ouïes **37**) de manière qu'aucun rayon pénétrant dans la chambre **28** ne puisse atteindre directement une ouïe **37.**

Les préformes **2** chauffées par le rayonnement infrarouge chauffent par rayonnement et/ou par conduction l'air régnant dans l'enceinte **8,** ce qui créée un mouvement d'air convectif ascendant et engendre par conséquent une dépression au voisinage des fonds **5** des préformes **2.** Cette dépression induit une aspiration d'air frais depuis le milieu environnant vers l'enceinte **8** via la chambre **28,** au travers des ouïes **37** puis des ouvertures **36** dans la paroi **29** supérieure, comme cela est représenté par les flèches **F** sur la figure 6.

On voit par ailleurs sur la figure 5 que le four **1** est muni, du côté du col **3** des préformes **2** (c'est-à-dire, dans le mode de réalisation illustré où les préformes **2** sont orientées col **3** en haut, du côté supérieur de l'enceinte **8**), de deux capots **39** en regard.

Les capots **39** présentent chacun une section **40** intérieure qui s'étend en porte-à-faux par rapport aux parois **9, 10** en direction d'un plan médian de l'enceinte **8,** et une section **41** extérieure par laquelle les capots **39** sont fixés de manière réglable sur les parois **9, 10** latérales. Les capots **39** forment ainsi conjointement une paroi supérieure qui délimite l'enceinte **8** vers le haut.

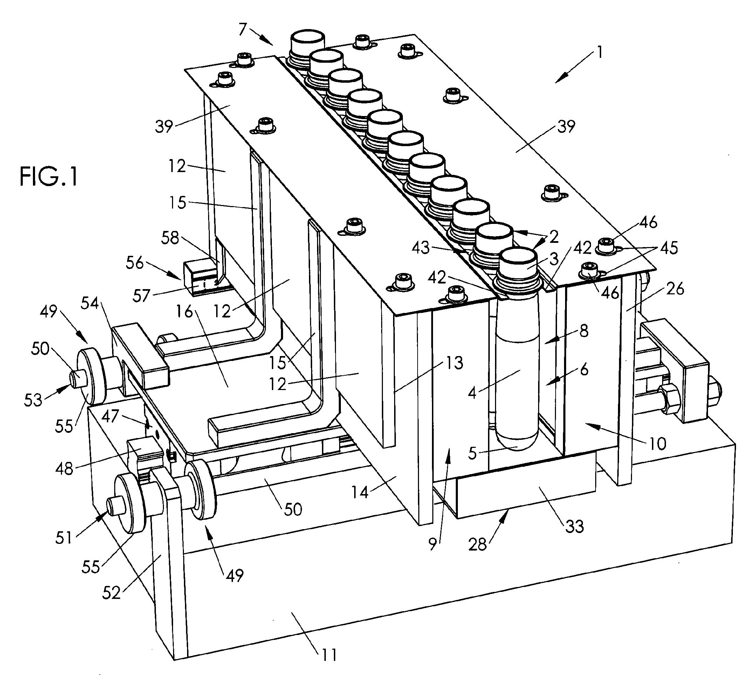

Les capots **39** sont cependant espacés transversalement l'un de l'autre, et leurs bords **42** internes respectifs définissent entre eux une rainure **43** longitudinale dans laquelle circulent les préformes **2** et dont émergent les cols **3,** comme cela est visible notamment sur les figures 1 et 5. On voit que la largeur de la rainure **43** (c'est-à-dire la distance entre les bords **42**) est inférieure au diamètre de collerette des préformes **2,** de sorte à bien isoler les cols **3** de l'enceinte **8** afin d'en minimiser l'échauffement.

Les capots **39** sont de préférence réalisés en métal et présentent une face **44** inférieure, tournée vers l'enceinte **8,** rendue réfléchissante par polissage ou par métallisation (par exemple par dorure).

Le positionnement transversal des capots **39** (et donc la largeur de la rainure **43**) est de préférence réglable. A cet effet, les sections extérieures **41** des capots **39** sont par exemple munies de trous **45** oblongs dans lesquels sont insérées des vis **46** de fixation des capots **39** aux parois **9, 10** latérales.

Ce réglage permet d'ajuster la largeur de la rainure **43** sans modifier la largeur de l'enceinte **8** qui, comme nous l'avons déjà évoqué, est réglable par ailleurs.

En effet, les parois **9, 10** latérales de l'enceinte **8** sont, par l'intermédiaire des plaques **14, 26,** fixées sur deux platines **16** elles-mêmes montées de manière coulissante transversalement sur le châssis **11.**

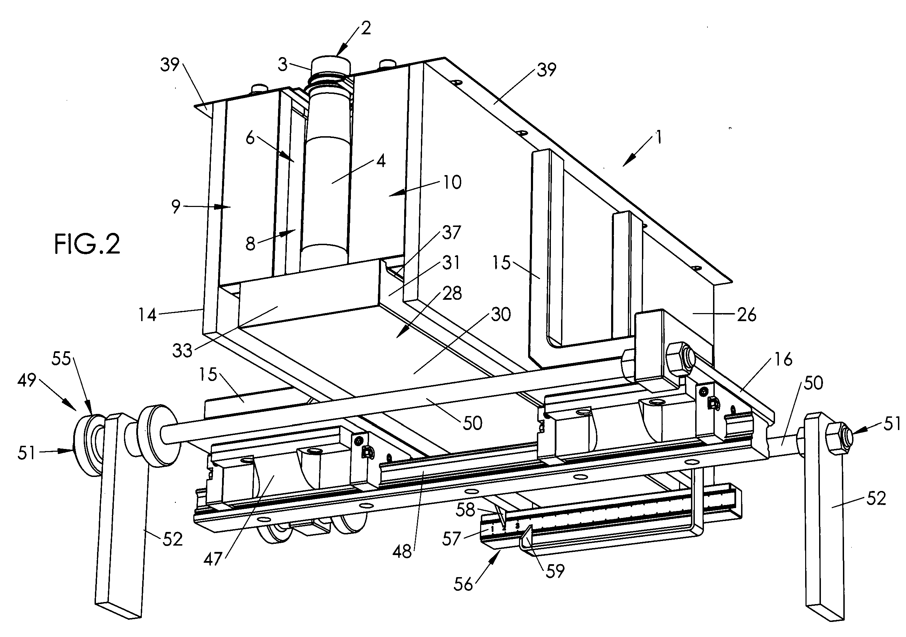

Plus précisément, ainsi qu'il est représenté sur les figures 1 et 2, chaque platine **16** est montée, par l'intermédiaire d'un coulisseau **47,** sur un rail **48** transversal commun rigidement fixé au châssis **11.**

Le four **1** comprend un dispositif **49** de réglage (en l'occurrence manuel mais qui peut être motorisé) de la position transversale de chaque platine **16.**

Chaque dispositif **49** de réglage comprend :
- une tige **50** filetée qui s'étend transversalement et dont une première extrémité **51** est fixée au châssis **11** par l'intermédiaire d'une patte **52,** et dont une deuxième extrémité **53** est fixée à la platine **16,** par l'intermédiaire d'un tenon **54** rapporté ;
- une molette **55** de réglage en prise hélicoïdale avec la tige filetée **50** à l'une des extrémités **51, 53** de celle-ci, et fixée soit sur la patte **52** de fixation, soit sur le tenon **54.**

Dans l'exemple illustré sur la figure 1, afin de permettre le réglage de la position transversale des deux platines **16** depuis un même côté du four **1,** les dispositifs **49** de réglage sont montés tête-bêche, leurs molettes **55** respectives étant fixées l'une à la platine **16,** l'autre au châssis **11.**

Pour rapprocher les platines **16** (et donc diminuer la largeur de l'enceinte **8**) on tourne les molettes **55** dans le sens horaire ; pour les éloigner (et donc augmenter la largeur de l'enceinte **8**), on tourne les molettes **55** dans le sens antihoraire. On a ainsi représenté le four **1 :**

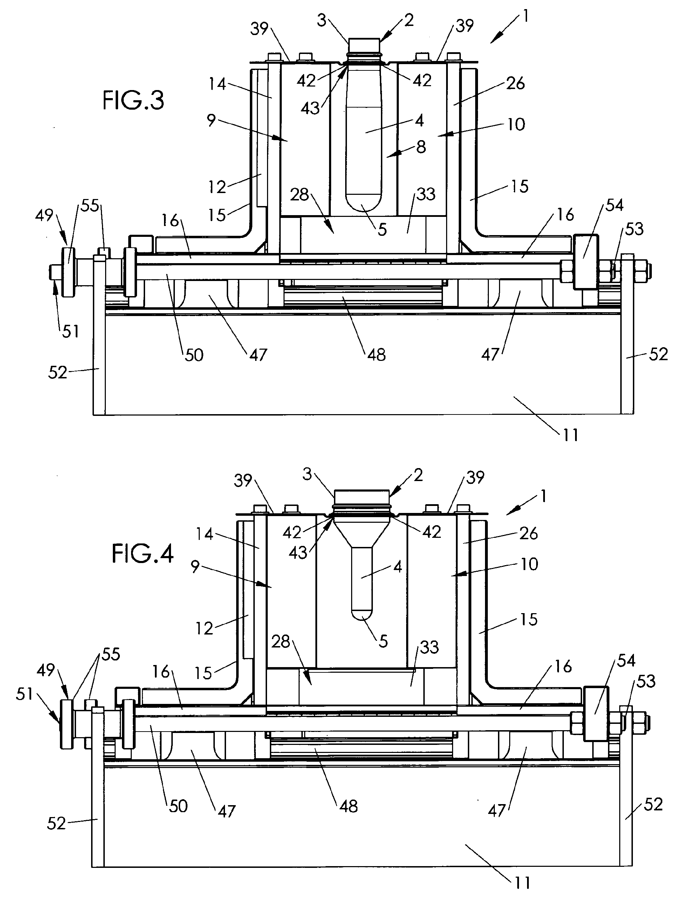

- sur la figure 3 dans une configuration étroite adaptée à la chauffe de préformes **2** à col **3** étroit,
- sur la figure **4** dans une configuration élargie adaptée à la chauffe de préformes **2** à col **3** large.

Comme cela est visible sur les figures 1 et 2, le four **1** est en outre muni d'un système **56** de mesure de la position transversale relative des parois **9, 10** latérales, qui comprend une règle **57** graduée positionnée transversalement, et deux repères **58, 59** de lecture fixés chacun à une paroi **9, 10** latérale. Le déplacement transversal de chaque paroi **9, 10** latérale provoque le déplacement concomitant du repère **58, 59** de lecture correspondant. Selon un mode de réalisation, on peut configurer le système **56** de mesure - par exemple en ajustant le positionnement transversal ou la longueur de l'un des repères **58, 59** de lecture - pour que l'écartement entre ceux-ci soit égal à la largeur de l'enceinte **8,** c'est-à-dire à l'écartement entre les parois **9, 10** latérales.

Le réglage de la position transversale des parois **9, 10** est effectué de manière que le plan médian de l'enceinte **8** soit invariant, afin qu'aucune adaptation du trajet de convoyage des préformes **2** ne soit nécessaire.

En outre, la chambre **28** est dimensionnée pour toujours obstruer le côté de l'enceinte **8** où elle se trouve (le côté inférieur dans l'exemple illustré sur les figures). Plus précisément, comme cela est visible sur la figure 4, la chambre **28** présente une largeur supérieure à la largeur maximale de l'enceinte **8,** de sorte que la paroi **29** supérieure soit toujours au droit des parois latérales **9, 10.**

## Revendications

1. Unité (1) de traitement d'ébauches (2) de corps creux en matière plastique, qui comprend :
- une enceinte (8) dans laquelle défilent longitudinalement les ébauches (2),
- une pluralité de sources de rayonnement électromagnétique monochromatique ou pseudo-monochromatique disposées sur au moins un côté latéral de l'enceinte (8),
cette unité (1) de traitement:
comprenant une chambre (28) destinée à permettre une ventilation de l'enceinte (8) par une circulation d'air tout en formant une barrière au rayonnement électromagnétique émis par les sources, la chambre (28) jouxtant l'enceinte (8) sur un côté supérieur ou inférieur de celle-ci, la chambre (28) s'étendant le long de l'enceinte (8) sur le côté de l'enceinte (8) vers lequel sont tournés les fonds des ébauches (2),
la chambre (28) comprenant une paroi (29) supérieure, au droit des parois latérales (9, 10) de l'enceinte (8), cette paroi (29) supérieure étant munie d'une ouverture (36) par laquelle la chambre (28) communique avec l'enceinte (8),
la chambre (28) comprenant des d'ouïes (37) par lesquelles elle communique avec un environnement extérieur, les ouïes (37) étant positionnées dans un angle mort de la chambre (28), de manière à empêcher que le rayonnement pénétrant dans la chambre (28) ne sorte directement de celle-ci,
l'air frais en provenance de l'environnement extérieur traversant la chambre (28) via les ouïes (37) puis pénétrant dans l'enceinte (8) par l'ouverture (36)

2. Unité (**1**) de traitement selon la revendication 1, dans laquelle la chambre (**28**) est munie de parois (**29, 30, 31**) dont une face interne est munie d'un revêtement absorbant le rayonnement.

3. Unité (**1**) de traitement selon l'une des revendications précédentes, dans laquelle la chambre (**28**) comprend des parois (**31**) latérales dans lesquelles sont formées les ouïes (**37**).

4. Unité (**1**) de traitement selon la revendication 3, dans laquelle les ouïes (**37**) sont formées au voisinage d'un bord (**38**) supérieur des parois (**31**) latérales.

5. Unité (**1**) de traitement selon la revendication 4, dans laquelle les ouïes (**37**) sont formées par des échancrures ménagées dans le bord (**38**) supérieur des parois (**31**) latérales.

6. Unité (**1**) de traitement selon l'une quelconque des revendications 1 à 5, dans laquelle la paroi (**29**) supérieure de la chambre (**28**) comprend une série d'ouvertures (**36**) situées le long d'un parcours des ébauches (**2**).

7. Unité (**1**) de traitement selon l'une des revendications précédentes, dans laquelle l'ouverture (**36**) est centrée sur un plan médian de l'enceinte (**8**).

8. Unité (**1**) de traitement selon l'une des revendications précédentes, qui comprend des capots (**39**) de fermeture de l'enceinte (**8**) du côté de celle-ci opposé à la chambre (**28**).

9. Unité (**1**) de traitement selon la revendication 8, qui comprend des moyens (**45, 46**) de réglage de la position transversale des capots (**39**).

10. Unité (**1**) de traitement selon l'une des revendications précédentes, qui comprend un dispositif (**49**) de réglage de la largeur de l'enceinte (**8**).

11. Unité (**1**) de traitement selon la revendication 10, dans lequel l'enceinte (**8**) est délimitée transversalement par deux parois (**9, 10**) latérales montées chacune sur une platine (**16**) mobile transversalement.

## Patentansprüche

1. Einheit (1) zur Bearbeitung von Hohlkörperrohlingen (2) aus Kunststoff, die umfasst:
- einen Bereich (8), in dem die Rohlinge (2) in Längsrichtung vorbeilaufen,
- eine Mehrzahl von Quellen elektromagnetischer monochromatischer oder pseudo-monochromatischer Strahlung, die an mindestens einer Seite des Bereichs (8) angeordnet sind,
wobei diese Einheit (1) zur Bearbeitung:
eine Kammer (28) umfasst, die dazu bestimmt ist, eine Belüftung des Bereichs (8) durch eine Luftzirkulation unter gleichzeitiger Bildung einer Barriere für die von den Quellen emittierte elektromagnetische Strahlung zu gestatten, wobei die Kammer (28) an den Bereich (8) an einer oberen oder unteren Seite dessen angrenzt, wobei die Kammer (28) sich entlang des Bereichs (8) an der Seite des Bereichs (8), zu dem hin die Böden der Rohlinge (2) gewandt sind, erstreckt,
wobei die Kammer (28) eine obere Wand (29), rechtwinklig zu den seitlichen Wänden (9, 10) des Bereichs (8), umfasst, wobei diese obere Wand (29) mit einer Öffnung (36) versehen ist, durch die die Kammer (28) mit dem Bereich (8) verbunden ist,
wobei die Kammer (28) Einlässe (37), durch die sie mit einer Außenumgebung verbunden ist, umfasst, wobei die Einlässe (37) in einem toten Winkel der Kammer (28) positioniert sind, sodass verhindert wird, dass die in die Kammer (28) eindringende Strahlung direkt aus dieser entweicht,
wobei die aus der Außenumgebung stammende Frischluft die Kammer (28) über die Einlässe (37) durchquert und danach in den Bereich (8) durch die Öffnung (36) gelangt

2. Einheit (1) zur Bearbeitung nach Anspruch 1, bei der die Kammer (28) mit Wänden (29, 30, 31) versehen ist, von denen eine Innenfläche mit einer Beschichtung, die die Strahlung absorbiert, versehen ist.

3. Einheit (1) zur Bearbeitung nach einem der vorangehenden Ansprüche, bei der die Kammer (28) seitliche Wände (31), in denen Einlässe (37) ausgebildet sind, umfasst.

4. Einheit (1) zur Bearbeitung nach Anspruch 3, bei der die Einlässe (37) in der Nähe eines oberen Rands (38) der seitlichen Wände (31) ausgebildet sind.

5. Einheit (1) zur Bearbeitung nach Anspruch 4, bei der die Einlässe (37) durch im oberen Rand (38) der seitlichen Wände (31) eingearbeitete Ausschnitte ausgebildet sind.

6. Einheit (1) zur Bearbeitung nach einem der Ansprüche 1 bis 5, bei der die obere Wand (29) der Kammer (28) eine Serie von Öffnungen (36), die entlang eines Wegs der Rohlinge (2) angeordnet sind, umfasst.

7. Einheit (1) zur Bearbeitung nach einem der vorangehenden Ansprüche, bei der die Öffnung (36) in einer medianen Ebene des Bereichs (8) zentriert ist.

8. Einheit (1) zur Bearbeitung nach einem der vorangehenden Ansprüche, die Abdeckungen (39) zum Schließen des Bereichs (8) an der der Kammer (28) gegenüberliegenden Seite umfasst.

9. Einheit (1) zur Bearbeitung nach Anspruch 8, die Mittel (45, 46) zum Einstellen der Querposition der Abdeckungen (39) umfasst.

10. Einheit (1) zur Bearbeitung nach einem der vorangehenden Ansprüche, die eine Vorrichtung (49) zum Einstellen der Breite des Bereichs (8) umfasst.

11. Einheit (1) zur Bearbeitung nach Anspruch 10, bei der der Bereich (8) in Querrichtung durch zwei seitliche Wände (9, 10), die jeweils auf einer in Querrichtung beweglichen Platine (16) montiert sind, begrenzt wird.

## Claims

1. Unit (1) for treating hollow-body blanks (2) made of plastic material, which comprises:
- an enclosure (8) in which the blanks (2) travel longitudinally,
- a plurality of sources of monochromatic or pseudo-monochromatic electromagnetic radiation positioned on at least one lateral side of the chamber (8),
this treatment unit (1):
comprising a chamber (28) intended to allow a ventilation of the enclosure (8) by a circulation of air while forming a barrier to the electromagnetic radiation emitted by the sources, the chamber (28) juxtaposing the enclosure (8) on a top or bottom side thereof, the chamber (28) extending along the enclosure (8) on the side of the enclosure (8) towards which the bottoms of the blanks (2) are turned,
the chamber (28) comprising a top wall (29), directly below the lateral walls (9, 10) of the enclosure (8),
this top wall (29) being provided with an opening (36) through which the chamber (28) communicates with the enclosure (8),
the chamber (28) comprising inlets (37) through which it communicates with an external environment, the inlets (37) being positioned in a dead corner of the chamber (28), so as to prevent the radiation penetrating into the chamber (28) from exiting directly therefrom,
the fresh air from the external environment passing through the chamber (28) via the inlets (37) then penetrating into the enclosure (8) through the opening (36).

2. Treatment unit (1) according to Claim 1, in which the chamber (28) is provided with walls (29, 30, 31), an internal face of which is provided with a radiation-absorbent coating.

3. Treatment unit (1) according to one of the preceding claims, in which the chamber (28) comprises lateral walls (31) in which the inlets (37) are formed.

4. Treatment unit (1) according to Claim 3, in which the inlets (37) are formed in the vicinity of a top edge (38) of the lateral walls (31).

5. Treatment unit (1) according to Claim 4, in which the inlets (37) are formed by cut-outs formed in the top edge (38) of the lateral walls (31).

6. Treatment unit (1) according to any one of Claims 1 to 5, in which the top wall (29) of the chamber (28) comprises a series of openings (36) situated along a path of the blanks (2).

7. Treatment unit (1) according to one of the preceding claims, in which the opening (36) is centred on a median plane of the enclosure (8).

8. Treatment unit (1) according to one of the preceding claims, which comprises caps (39) closing the enclosure (8) on the side thereof opposite the chamber (28).

9. Treatment unit (1) according to Claim 8, which comprises means (45, 46) for setting the transverse position of the caps (39).

10. Treatment unit (1) according to one of the preceding claims, which comprises a device (49) for setting the width of the enclosure (8).

11. Treatment unit (1) according to Claim 10, in which the enclosure (8) is delimited transversely by two lateral walls (9, 10) each mounted on a transversely mobile plate (16).
